# EUROPEAN PATENT SPECIFICATION

(11) **EP 0 826 307 B1**
(45) Date of publication and mention of the grant of the patent: **31.10.2001**
(21) Application number: 96101969.2
(22) Date of filing: 25.06.1990
(51) Int. Cl.: A23B 9/18, A23L 3/3409

(54) **Fumigation of multiple grain storages**
Begasung einer Mehrzahl von Lagerbehältern für Getreide
Fumigation de plusieurs chambres de stockage de grain

(30) Priority: 27.06.1989 AU PJ493689
(43) Date of publication of application: 04.03.1998
(62) Divisional of application: 90909574.7
(73) Proprietor: Commonwealth Scientific and Industrial Research Organisation, Campbell, Australian Capital Territory 2612 (AU)
(72) Inventor: Winks, Robert Gordon, Isaacs, Australian Capit.Territory 2607 (AU)
(74) Representative: Marshall, Monica Anne

(56) References cited:
- EP-A- 0 247 555
- FR-A- 819 292
- GB-A- 518 118
- GB-A- 1 123 625
- GB-A- 2 177 004
- US-A- 3 802 333

## Description

### Technical Field

This invention concerns the fumigation of stored, particulate foodstuffs, such as grain and pulses. More particularly, it concerns apparatus for fumigating a grain storage facility having a plurality of silos, using a single source of a mixture of a carrier gas and a gaseous fumigant (typically phosphine).

### Background

In this specification, for convenience, the term "grain" will be used in the sense that it encompasses not only grain but other particulate foodstuffs that are commonly stored in bulk, such as peanuts, lentils, peas and other pulses. This list is not intended to be exhaustive. Also, in this specification, the term "grain pests" will encompass the pests usually found in stored "grain" and well known to persons who handle grain storages, being predominantly beetles and some species of moth.

For many years, a number of chemical pesticides have been applied to stored grain to kill the grain pests that may be present in the grain. Many of such chemical pesticides leave residues which can be harmful, and care has to be exercised to ensure that the prescribed maximum residue limit (MRL) is not exceeded.

This problem with residues has led to the preference for using fumigants instead of the protectant chemicals. And among the fumigants, phosphine is preferred because any residue that might be left in the grain will be lost or oxidised to harmless phosphate when the grain is processed to produce a food.

The main problem with applying a fumigant such as phosphine to a grain storage (such as a silo) concerns dosage rates and maintaining an environment within the grain which ensures proper elimination of the pests. As noted by Dr R G Winks in his paper entitled "Flow-through phosphine fumigation - a new technique", which was delivered to the Stored Grain Protection Conference, 1983, if the so-called "one-shot" or "one-pass" technique is used with phosphine from a gas source (for example, from a solid formulation of aluminium phosphide) being applied to a leaking silo, the concentration of phosphine within the grain in the silo is likely to decay to zero in about 4 or 5 days. Thus the fumigant is ineffective after about 5 days. Even when a fumigant is applied to grain in a completely sealed silo (for example using the techniques described in the specification of US patent No 4,200,657 to James S Cook), there is a decay of the effective concentration of phosphine in the grain as it is absorbed and used to exterminate grain pests. Thus, whether the fumigant is applied to the grain in utilising Cook's one-pass technique or his recirculating technique (each technique, Cook claims, results in a uniform distribution of phosphine or other fumigant within the grain mass before the forced gas flow through the grain mass is discontinued), there will be a significant fall-off in effectiveness of the technique after a relatively short time period. A similar comment is applicable to the one-shot fumigation technique described in the specification of South African patent No 86/4806, which corresponds to Australian patent No 589,646, in the name of The Commonwealth Industrial Gases Limited. That technique simply requires the release of a phosphine-containing gas into the grain mass of a silo.

For complete elimination of grain pests, it is essential that a sufficiently high dosage of phosphine remains in the silo long enough to ensure that the more tolerant stages in the development of an insect pest mature into a less tolerant stage and are killed by the phosphine. In this way, resistant strains of the pests cannot develop.

In a substantially gas-tight silo, the phosphine concentration decays to zero in about 16 days. The work required to make old storages gas-tight is costly and is not always successful. A continuous fumigation technique is described in European Patent Application 90909574.7 (Publication No. EP 0508984) from which this application is divided.

European Patent Application EP-A-0 247 555 discloses an apparatus for effecting the simultaneous fumigation of a plurality of silos in a grain storage facility. A mixture of an inert carrier gas and phosphine is produced in a generator device. The gaseous mixture flows through a gas supply duct to a branched distribution system of parallel ducts, the gas flow to the gas supply duct being controlled with the help of a flow meter. Each of said parallel ducts is connected to a gas inlet port and gas distribution means in a separate silo, each connection including a valve and a coupling member.

In many grain storage establishments, a number of silos of different shapes and sizes are built in close proximity to each other and grain is deposited into an empty silo or removed from a silo containing grain, as required. In such systems, as in any multi-silo storage facility, it would be advantageous to provide a single fumigation arrangement, utilising a single source of phosphine (or other suitable gaseous fumigant) and carrier gas, which ensures that any number of the silos in the facility can be fumigated simultaneously, using fumigant from the single source of gaseous fumigant, without the need for a major re-design of the fumigation system each time a silo is brought into use for grain storage, or is removed from the system because it has been emptied of grain.

### Disclosure of the Present Invention

It is an object of the present invention to provide an arrangement which can be used to implement the simultaneous fumigation of any number of silos in a grain storage facility having a plurality of silos - possibly of different sizes and types - with variation of the number of silos in use at any time, utilising a single source of fumigant-containing gas.

To achieve this objective, a single gas mixture source is connected to a single gas supply duct. The gas supply duct is connected to a gas input port of each silo in the grain storage facility. Between the gas supply duct and each silo gas input port, there is a respective valve (which is opened when grain is stored in the silo and is closed when the silo is empty) and a respective orifice plate. Each gas input port should be connected to a respective gas distribution arrangement within its associated silo to ensure that the input gas moves throughout the grain mass in the silo when fumigation is occurring. The orifice plates are scaled or sized to ensure that the maximum pressure drop in the entire fumigation system is across the orifice plates.

This arrangement effectively renders the fumigation system as a whole insensitive to variations in the system downstream of an orifice plate. Thus if, after steady state conditions have been established, a silo containing grain is to be emptied of grain and the valve between that silo and the gas supply duct is closed, there will be only a minor perturbation of the gas supply to the input ports of the remaining silos in the system. Similarly, if a previously empty silo is filled or partially filled with grain, the opening of the valve between the gas input port of that silo and the gas supply duct enables fumigation of the grain in that silo to commence with only a small effect upon the gas flow from the gas supply duct into the other silos of the storage facility. The minor correction in gas flow that is required to compensate for the removal of a silo from, or the addition of a silo to the system can be effected by bringing the pressure within the gas supply duct back to its steady state value by adjustment of a suitable control mechanism for the gas supply to the gas supply duct.

Thus, according to the present invention, there is provided apparatus for effecting the simultaneous fumigation of a number of silos in a grain storage facility having a plurality of silos, said apparatus comprising:
(a) a single source of a mixture of a carrier gas and a gaseous fumigant;
(b) a single gas supply duct connected to said source;
(c) control means for varying the supply of said gas mixture from said source to said gas supply duct; and
(d) a respective connection between said gas supply duct and a gas inlet port at or near the base of each silo in the facility, each said connection including a valve and an orifice plate, each said orifice plate being adjusted to provide a pressure drop across the plate which is substantially greater than the pressure drop across any other component between said single source and the silo with which the orifice plate is associated.

The control means may comprise a control valve between the source and the duct, or it may comprise any other suitable arrangement for controlling the supply of gas to the gas supply duct (for example, means to vary the speed of a fan which causes the gas mixture to flow into the gas supply duct).

Once such a system has been set up to establish the required flow rate of fumigant-containing gas through the silos, the flow rate through the grain in each silo containing grain can be maintained at the required level when a valve in a connection between the gas supply duct and a silo is opened or closed, simply by varying the setting of the control valve (or other form of control means) to maintain a constant pressure of the gas within the gas supply duct.

The fumigation arrangement of the present invention was designed for use with a plurality of vertical silos (that is, silos having a height to width ratio of at least 1.5 to 1). However, as noted above, the system is equally applicable to grain storage facilities comprising silos of other types and capacities.

Preferably, the fumigation method practiced with the present invention will be that described in the specification of European Patent Application 90909574.7 (Publication No. EP 0508984) from which this application is divided.

Further discussion of the implementation of the present invention in a multi-silo grain storage facility will now be provided, with reference to the accompanying drawings.

### Brief Description of the Drawings

Figure 1 is a diagram showing the changes in phosphine tolerance of a typical grain pest during its development.

Figure 2 illustrates the reduction in the survival of grain pests within a grain sample when the grain is subjected to fumigation with constant concentrations of phosphine.

Figure 3 is a schematic diagram of a multi-silo fumigation system constructed in accordance with the present invention.

### Further Discussion of the Present Invention

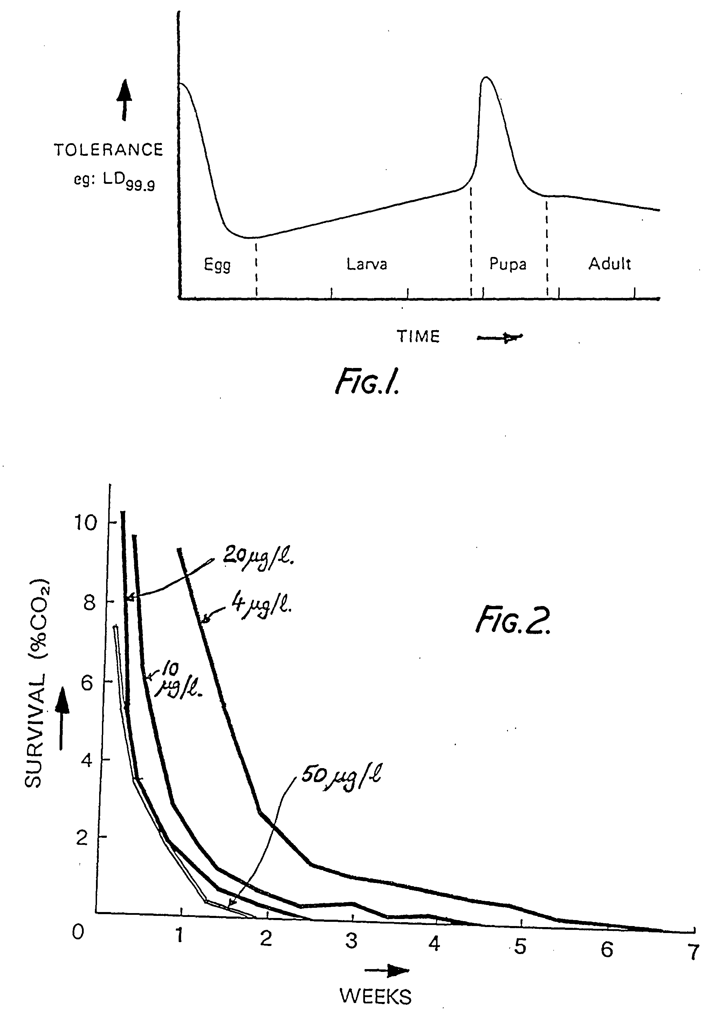

The diagram of Figure 1, which has appeared previously in the aforementioned Rural Research article and in the paper by R G Winks entitled "The effect of phosphine on resistant insects", which is included in the Proceedings of the CASGA Seminar on Fumigation Technology in Developing Countries, 1986, pages 105 to 118, shows how insect eggs and the pupal stage of the development of a beetle or other grain pest is significantly more resistive to fumigation than the larval and adult stages. Thus if a grain storage is fumigated at a constant concentration of phosphine, the concentration must be sufficiently high to destroy all eggs and pupae, or it must be maintained at a value which is adequate to kill all adult pests and their larvae for a time sufficient for the more tolerant eggs to become the less tolerant larvae and for the pupae to become adults.

By monitoring the carbon dioxide production (from insect respiration) in a sample of grain which was infested with Sitophilus granarius, to which phosphine was supplied at a constant concentration, the results displayed in graph form in Figure 2 where obtained. These results show that even with phosphine concentrations as low as 4 micrograms per litre at a temperature of 25°C, all stages of the pest had been destroyed after a period of continuous exposure to phosphine of about 6.5 weeks. The results also show that the time for all insect stages to be destroyed decreases as the phosphine concentration is increased. Similar results have been obtained using other concentrations of phosphine and with infestations of other species of grain pests (including Tribolium castaneum, Rhyzopertha dominica, Sitophilus oryzae, Sitophilus zeamais, Bruchus pisorum, oryzaephilus surinamensis and Ephestia cautella).

The benefits of the controlled low-flow fumigation technique, compared with conventional grain storage treatments, have been outlined in the aforementioned paper delivered by Dr R G Winks at the 1983 Stored Grain Protection Conference. Simple apparatus for establishing that technique in a single silo was suggested when presenting that paper. A system for establishing that low-flow fumigation in multi-silo grain storage facilities constitutes the preferred form of the present invention (though it will be appreciated that other fumigation techniques can be effected using the present invention).

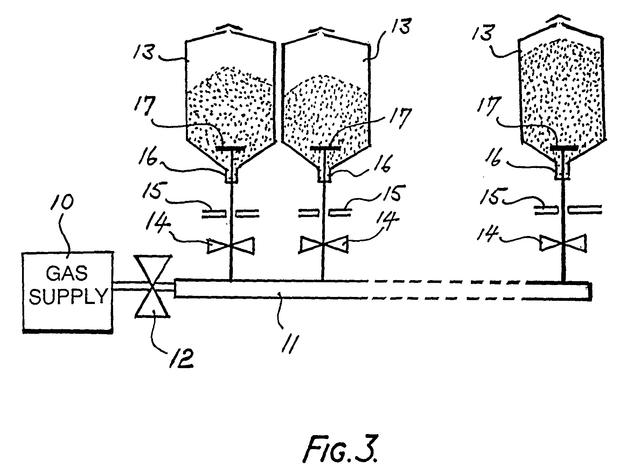

Referring now to Figure 3, the schematically illustrated embodiment of the present invention comprises a source 10 of a fumigant-containing gas which is supplied under a pressure of about 500 to 700 Pa (that is, a pressure of about 2 inches water gauge). This pressure is usually established by a fan (not shown in Figure 3) which provides a flow of the carrier gas, into which the fumigant gas (preferably phosphine) is introduced by conventional techniques. The source 10 of gas is connected to a gas supply duct 11 by a control valve 12. The gas supply duct 11 is connected to a gas entry port 16 of each silo 13 in the system by a respective connection comprising a valve 14 and an orifice plate 15. Preferably a distributor 17 is provided in each silo to ensure that the carrier gas and its fumigant are distributed within the grain mass in such a manner that a uniform flow of gas is established within each grain mass. Each distributor 17 may comprise a louvre arrangement.

The orifice plates 15 are sized so that the maximum pressure drop in the system (when fumigation of the grain in the silos is in progress) is across the orifice plates. As explained earlier in this specification, a steady state fumigation system is set up with the required gas flow through the masses of grain being fumigated. This steady state condition of operating will be perturbed to only a small degree if an additional silo (also called a "bin") is brought into the system, or if one of the valves 14 is closed because fumigation is not required in a silo (for example, when it is about to be emptied of grain and when it is empty). Such a minor perturbation can be readily corrected by adjusting the setting of the control valve 12 so that the pressure of gas in the duct 11 is returned to its steady state value, whereupon the system will again be operating in its required manner. In addition, and perhaps more importantly, when the present invention is used, only very minor changes in pressure in the gas supply duct are experienced if a bin should be only partly filled, or if some of the bins of the storage facility contain different commodities.

Using such a system, with phosphine as the gaseous fumigant, a fumigation system for a grain storage facility having eighteen silos or bins has been designed.

If phosphine is the gaseous fumigant, the phosphine may be obtained from a cylinder of a pressurised mixture of phosphine and carbon dioxide. However, as noted earlier in this specification, an on-site generator is an alternative source of phosphine, which is preferred in areas where a regular supply of gas cylinders cannot be guaranteed.

Variations to the arrangement shown in Figure 3 are possible. As already noted, the control valve 12 may be replaced with an alternative arrangement for controlling the supply of fumigant-containing gas to the duct 11. For example, the control of the gas supply could be by variation of the speed of a fan that is used to create the gas mixture supply 10, or by the use of multiple fans which are brought into the system, with their speeds varied, as required.

Other modifications of an engineering nature may be made without departing from the present inventive concept.

## Claims

1. Apparatus for effecting the simultaneous fumigation of any number of silos (13) in a grain storage facility comprising a plurality of silos, said apparatus comprising:
(a) a single source (10) of a mixture of a carrier gas and a gaseous fumigant;
(b) a single gas supply duct (11) connected to said source;
(c) control means (12) for varying the supply of said gas mixture from said source to said gas supply duct; and
(d) a respective connection between said gas supply duct (11) and a gas inlet port (16) at or near the base of each silo in the facility, each said connection including a valve (14) and an orifice plate (15), each said orifice plate being adjusted to provide a pressure drop across the plate which is substantially greater than the pressure drop across any other component between said gas mixture source and the silo with which the orifice plate is associated.

2. Apparatus as defined in claim 1, including respective means (17) within each silo (13), operatively connected to the gas inlet port (16) of its respective silo, for distributing the carrier gas and fumigant mixture within the grain mass in its associated silo.

3. Apparatus as defined in claim 1, in which said control means (12) comprises a control valve between said single source and said gas supply duct.

4. Apparatus as defined in claim 2, in which said control means (12) comprises a control valve between said single source and said gas supply duct.

5. Apparatus as defined in any preceding claim, in which the gaseous fumigant in said mixture is phosphine.

6. Apparatus as defined in claim 5, in which the phosphine is supplied from a cylinder containing either compressed phosphine or a compressed mixture of phosphine with another gas.

7. Apparatus as defined in claim 5, in which the phosphine is supplied by an on-site generator of phosphine.

## Patentansprüche

1. Vorrichtung zur Durchführung der gleichzeitigen Begasung einer beliebigen Anzahl von Silobehältern (13) in einer eine Mehrzahl von Silos umfassenden Getreidelagereinrichtung, umfassend:
(a) eine einzige Quelle (10) für ein Gemisch aus einem Trägergas und einem gasförmigen Begasungsmittel;
(b) eine einzige Gaszufuhrröhre (11), die mit der Quelle verbunden ist;
(c) Steuermittel (12) zur Variation der Zufuhr des Gasgemischs aus der Quelle zu der Gaszufuhrröhre; und
(d) eine jeweilige Verbindung zwischen der Gaszufuhrröhre (11) und einer Gaseinlassöffnung (16) an oder nahe dem Boden jedes Silos in der Einrichtung, wobei diese Verbindung ein Ventil (14) und eine Drosselscheibe (15) umfasst, wobei jede Drosselscheibe so eingestellt ist, dass über die Scheibe ein Druckabfall erfolgt, der wesentlich größer als der Druckabfall über irgendeine andere Komponente zwischen der Gasgemischquelle und dem Silo, dem die Drosselscheibe zugeordnet ist, ist.

2. Vorrichtung gemäß Anspruch 1, die in jedem Silo (13) jeweils mit der Gaseinlassöffnung (16) des jeweiligen Silos operativ verbundene Mittel (17) zur Verteilung des Trägergases und des Begasungsgemischs in der Getreidemasse in dem zugeordneten Silo umfasst.

3. Vorrichtung gemäß Anspruch 1, worin die Steuervorrichtung (12) ein Steuerventil zwischen der einzigen Quelle und der Gaszufuhrröhre umfasst.

4. Vorrichtung gemäß Anspruch 2, worin die Steuervorrichtung (12) ein Steuerventil zwischen der einzigen Quelle und der Gaszufuhrröhre umfasst.

5. Vorrichtung gemäß einem der vorhergehenden Ansprüche, worin das gasförmige Begasungsmittel in dem Gemisch Phosphin ist.

6. Vorrichtung gemäß Anspruch 5, worin das Phosphin aus einer Druckgasflasche, die entweder komprimiertes Phosphin oder ein komprimiertes Gemisch von Phosphin mit einem anderen Gas enthält, zugeführt wird.

7. Vorrichtung gemäß Anspruch 5, worin das Phosphin von einem Phosphingenerator vor Ort geliefert wird.

## Revendications

1. Dispositif pour effectuer la fumigation simultanée d'un nombre quelconque de silos (13) dans une installation de stockage de grain comprenant une pluralité de silos, ledit dispositif comprenant :
(a) une seule source (10) d'un mélange d'un gaz porteur et d'un fumigant gazeux;
(b) un conduit (11) d'amenée du gaz raccordé à ladite source;
(c) des moyens de commande (12) pour modifier l'amenée dudit mélange gazeux de ladite source audit conduit d'amenée de gaz; et
(d) un raccordement respectif entre ledit conduit d'amenée de gaz (11) et un orifice d'entrée de gaz (16) dans ou à proximité de la base de chaque silo dans l'installation, chacun desdits raccordements comprenant une vanne (14) et une plaque à orifices (15), chacune desdites plaques à orifices étant ajustée de manière à produire une baisse de pression à travers elle, qui est nettement supérieure à la baisse de pression dans n'importe quel autre composant entre ladite source de mélange gazeux et le silo, auquel la plaque à orifices est associée.

2. Dispositif selon la revendication 1, incluant des moyens respectifs (17) contenus dans chaque silo (13) et raccordés de façon opérationnelle à l'orifice (16) d'entrée du gaz de son silo respectif, pour distribuer le gaz porteur et le mélange fumigatoire dans la masse de grains dans le silo qui lui est associé.

3. Dispositif selon la revendication 1, dans lequel lesdits moyens de commande (12) comprennent une vanne de commande située entre la source unique et ledit conduit d'amenée de gaz.

4. Dispositif selon la revendication 2, dans lequel lesdits moyens de commande (12) comprennent une vanne de commande située entre ladite source unique et ledit conduit d'amenée de gaz.

5. Dispositif selon l'une quelconque des revendications précédentes, dans lequel le fumigant gazeux dans ledit mélange est de la phosphine.

6. Dispositif selon la revendication 5, dans lequel la phosphine est amenée depuis une bouteille contenant soit de la phosphine comprimée, soit un mélange comprimé de phosphine et d'un autre gaz.

7. Dispositif selon la revendication 5, dans lequel la phosphine est envoyée par un générateur de phosphine installé sur le site.
